# EUROPEAN PATENT APPLICATION

(11) **EP 4 803 994 A1**
(43) Date of publication of application: **09.09.2026**
(21) Application number: 26159751.2
(22) Date of filing: 20.02.2026
(51) Int. Cl.: G06F 3/04817, G06Q 10/101

(54) **PROGRAM, INFORMATION PROCESSING METHOD, INFORMATION PROCESSING APPARATUS, AND INFORMATION PROCESSING SYSTEM**

(30) Priority: 04.03.2025 JP 2025033622
(71) Applicant: Casio Computer Co., Ltd., Tokyo 151-8543 (JP)
(72) Inventor: Ito, Masahiro, Hamura-shi, Tokyo, 205-8555 (JP)
(74) Representative: Grünecker Patent- und Rechtsanwälte PartG mbB

(57) **Abstract**

A program that causes a computer to function as, a controller (11) that, regarding a predetermined work area that is configured to be capable of at least displaying a plurality of electronic sticky notes that can be linked to each other, displays an icon for temporarily deleting at least the electronic sticky note from the predetermined work area at a predetermined position in the predetermined work area.

## Description

### BACKGROUND OF THE INVENTION

### TECHNICAL FIELD

The present disclosure relates to a program, an information processing method, an information processing apparatus, and an information processing system.

### DESCRIPTION OF RELATED ART

Conventionally, electronic sticky note conferencing terminals that share information among multiple terminals by placing one or more electronic sticky notes on a virtual board (predetermined work area) have been disclosed (see Japanese Unexamined Patent Application Publication No. 2015-90607).

However, if an electronic sticky note is accidentally deleted in a predetermined work area as described above, there is no way to restore the electronic sticky note. Therefore, it is necessary to create a similar electronic sticky note again, and the usability is not high.

The purpose of the present disclosure is to provide a program, an information processing method, an information processing apparatus, and an information processing system that can improve usability when deleting an electronic sticky note.

### SUMMARY OF THE INVENTION

In order to solve the above problem, according to an aspect of the present disclosure, a program that causes a computer to function as, a controller (11) that, regarding a predetermined work area that is configured to be capable of at least displaying a plurality of electronic sticky notes that can be linked to each other, displays an icon for temporarily deleting at least the electronic sticky note from the predetermined work area at a predetermined position in the predetermined work area.

### ADVANTAGEOUS EFFECTS

According to the present disclosure, it is possible to enhance usability when the electronic sticky note is deleted.

### BRIEF DESCRIPTION OF DRAWINGS

FIG. 1 is a block diagram indicating a learning support system according to an embodiment of the present disclosure.
FIG. 2 is a block diagram indicating a functional configuration of a server.
FIG. 3 is a diagram indicating an example of a notebook screen with objects arranged therein.
FIG. 4 is a block diagram indicating a functional configuration of a terminal device.
FIG. 5 is a diagram indicating an example of the notebook screen with an operation menu displayed.
FIG. 6 is a diagram indicating an example of a waste bin screen.
FIG. 7 is a diagram indicating an example of the notebook screen with a snackbar displayed.
FIG. 8 is a diagram indicating an example of a confirmation screen.
FIG. 9 is a diagram indicating an example of the waste bin screen in which a state of a waste bin is empty.
FIG. 10A is a diagram indicating a waste bin icon in response to the state of the waste bin being empty, and FIG. 10B is a diagram indicating the waste bin icon in response to the state of the waste bin being not empty.
FIG. 11 is a diagram indicating an example of the waste bin screen displaying a sticky note in which a license has expired.
FIG. 12 is a diagram indicating an example of the waste bin screen displaying the sticky note in which the license is valid.

### DETAILED DESCRIPTION

Hereinafter, embodiments of the present disclosure will be described in detail with reference to the accompanying drawings. The following embodiments are subject to various technically preferred limitations for implementing the present disclosure, but the scope of the present disclosure is not limited to the following embodiments and illustrated examples.

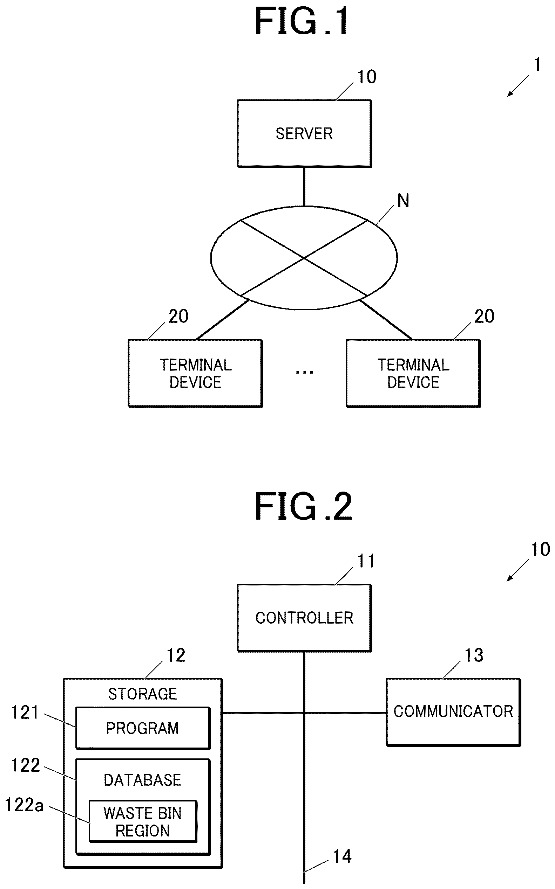

As shown in FIG. 1, a learning support system 1 (information processing system) includes a server 10 as an information processing apparatus and a plurality of terminal devices 20. The server 10 and the terminal device 20 are connected via a communication network N in a manner that communication is possible. The communication network N is any communication network, such as the Internet, wireless LAN (Local Area Network), wired LAN, mobile communication network, short-range wireless communication network, or a combination of some or all of these. The number of terminal devices 20 is not limited. A learning support system 1 includes a learning support function that provides a student at an educational institution with teaching support, such as creating a notebook, an online dictionary, and a math tool for a class and other activities, as well as conducting and submitting an assignment from a teacher. The learning support function is provided to a user whose account information (user ID and password) is registered in advance with the server 10.

The server 10 provides a learning support function via the web in response to access from the terminal device 20, stores information input in the learning support function in a database 122 (see FIG. 2) associated with a user ID, and reads information stored in the database 122 to transmit the information to the terminal device 20. As shown in FIG. 2, the server 10 includes a controller 11, a storage 12, and a communicator 13. The above sections are connected to each other via a system bus 14. The controller 11 includes a central processing unit (CPU), a random access memory (RAM), and the like. The CPU of the controller 11 is a processor that reads and executes a program 121 stored in the storage 12 into the RAM and performs various arithmetic operations to control the operation of the various sections of the server 10.

The storage 12 is a non-transitory recording medium readable by the CPU of the controller 11. The storage 12 stores the program 121 and various data. The storage 12 includes a nonvolatile memory such as a hard disk drive (HDD) or a solid-state drive (SSD). The program 121 stored in the storage 12 includes a program for providing the learning support function to the terminal device 20. The storage 12 is provided with a database 122 that stores information regarding the learning support function. The database 122 stores notebook management information that manages information pertaining to a notebook created by a user in the learning support function. The database 122 stores the notebook management information for the notebook used individually by the user in association with the user's user ID. In addition, the database 122 stores the notebook management information for the notebook used by a predetermined group to which a plurality of users belong in association with the user IDs of the users belonging to the predetermined group. In the learning support function, the user can create an object and place the created object in the notebook. The object includes a sticky note (electronic sticky note) which is a first object, and a second object. In other words, the notebook is a predetermined work area where the electronic sticky note can be displayed.

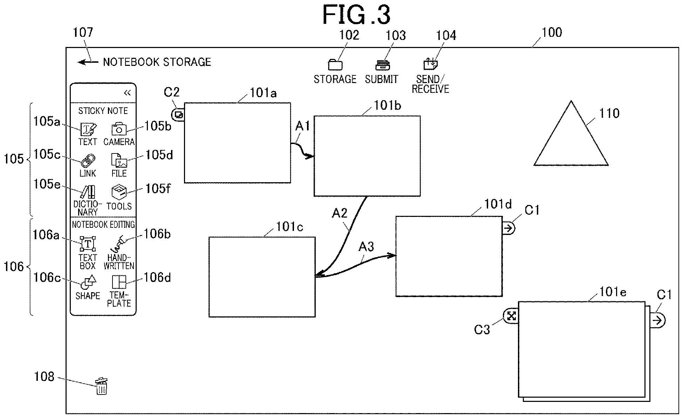

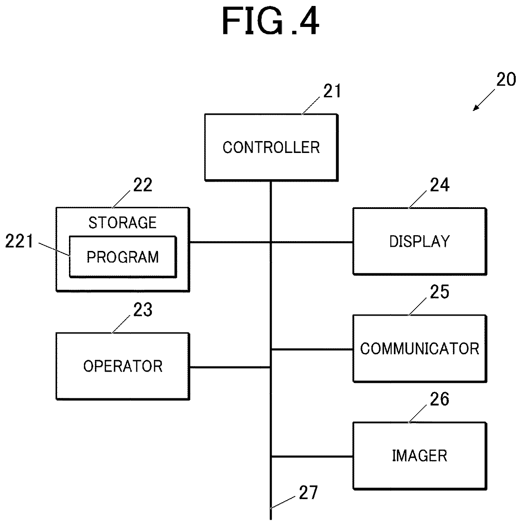

FIG. 3 is an example of a notebook screen 100 displaying the notebook. Sticky notes 101a to 101d, a superimposed sticky note 101e in which multiple sticky notes are superimposed, and a shape 110 as an example of the second object are arranged in the notebook. The notebook is a notebook-type web component (digital component) that is a display element to be displayed on a display 24 (see FIG. 4) of the terminal device 20. The sticky note is the web component that records learning items in various expressions. Here, an example in which a shape of the sticky note is a substantial rectangle is described, but the shape is not limited to this. The shape and size of the sticky note is to be such that the sticky note can be placed in the notebook. The user can move the sticky note placed in the notebook to any position in the notebook via the operator 23 (see FIG. 4) of the terminal device 20.

The sticky note can be linked to the sticky note by a directed linking line. In the example shown in FIG. 3, the sticky note 101a and the sticky note 101b are displayed in a state linked by a linking line A1, with the sticky note 101a as a starting point (linking source) and the sticky note 101b as an ending point (linking destination). The sticky note 101b and the sticky note 101c are displayed in a state linked by a linking line A2, with the sticky note 101b as the starting point (linking source) and the sticky note 101c as the ending point (linking destination). The sticky note 101c and the sticky note 101d are displayed in a state linked by a linking line A3, with the sticky note 101c as the starting point (linking source) and the sticky note 101d as the ending point (linking destination). According to the present embodiment, the linking line is an arrow, but it is not limited to the arrow as long as the line contains direction information. The multiple sticky notes linked by the linking lines have an order (sequence) according to the direction of the linking lines. The order of the multiple linked sticky notes is, for example, the order in which a slide show function displays each sticky note one after the other at set time intervals, or the order of the direction of a schedule for studying each sticky note. In the example shown in FIG. 3, the order of the sticky notes 101a through 101d is, from the top, the sticky note 101a, the sticky note 101b, the sticky note 101c, and the sticky note 101d. According to the present embodiment, the linking line shall not be branched (linked from one sticky note to one sticky note and not linked from one sticky note to multiple sticky notes).

In the example shown in FIG. 3, a linking mark C1 attached to the sticky note 101d and the superimposed sticky note 101e is an instruction means for instructing that the sticky notes are to be linked. In response to the user dragging and dropping the linking mark C1 of a given first sticky note to a given second sticky note, the CPU 11 links the first sticky note and the second sticky note by the linking line with the first sticky note as the linking source and the second sticky note as the linking destination. In the example shown in FIG. 3, a linked mark C2 attached to the sticky note 101a is a mark indicating that one of the sticky notes is linked to the sticky note 101a and that the sticky note 101a is the top (first) sticky note. In the example shown in FIG. 3, a superimposing mark C3 attached to the superimposed sticky note 101e is a mark indicating that the multiple linked sticky notes are superimposed. In response to clicking input operation by the user being performed on the linking mark C1 attached to multiple linked sticky notes, the CPU 11 superimposes the multiple linked sticky notes and displays the superimposing mark C3 on the superimposed sticky note 101e. In response to the clicking input operation by the user being performed on the superimposing mark C3, the CPU 11 deploys the superimposed sticky note 101e and returns the state to the state of multiple linked sticky notes.

The second object is the web component including a text box, a handwriting object, a shape and a template. The text box displays a text entered by the user via, for example, the keyboard which is the operator 23. The handwriting object is generated by handwritten input by the user via, for example, a mouse which is the operator 23. The shape is generated by the shape selected by the user via the operator 23 from a plurality of options for the shape. The template is generated by the template selected by the user via the operator 23 from a plurality of options for the template.

The notebook management information includes identification information of the target notebook, the identification information of the object placed in the notebook, the coordinate information of the object in the notebook, and the identification information of the sticky notes which are the linking source and the linking destination of the sticky notes, and the above information are associated with each other.

In addition, the database 122 stores the object management information that manages the information pertaining to the object created by the user in the learning support function. The object management information includes sticky note management information that manages the information pertaining to the sticky note created by the user and second object management information that manages information pertaining to the second object. The sticky note management information includes information such as identification information of the target sticky note, type of sticky note, contents of the sticky note, etc. The type of sticky note is information indicating a corresponding type of the sticky note, such as text sticky note, camera sticky note, link sticky note, file sticky note, dictionary sticky note, tool sticky note, etc. The type of each sticky note will be described in detail later. The sticky note content is information that indicates the contents of the sticky note and identifiably indicates a text string, an image, a video, etc. The sticky note content also includes information on display settings such as display position, display size, display angle, and background color of the sticky note, and the like. The second object management information includes information such as identification information of the target second object, type of second object, information about the second object, etc. The second object type is information indicating the type corresponding to the text box, the handwriting object, the shape and the template object. The information about the second object includes information about display settings such as the display position, the display size, the display angle, the color of the second object, and the like.

In addition, the database 122 is provided with a waste bin region 122a for each notebook. The waste bin region 122a is a storage region for deletion to temporarily store the object management information pertaining to the object that is restorably deleted (temporarily deleted) from the notebook screen 100 of the corresponding notebook. By moving the object management information to this waste bin region 122a, the object is considered to have been deleted from the notebook screen 100, but the object management information is not deleted from the database 122, and by moving the object management information from the waste bin region 122a to the original region, the object can be restored as valid again.

The communicator 13 performs a communication operation in accordance with a predetermined communication standard. Through this communication operation, the communicator 13 sends and receives data to and from the terminal device 20 via the communication network N.

The terminal device 20 is the information processing apparatus used by the user such as a teacher, a student, and the like in an educational institution, and an example of the terminal device 20 includes a notebook PC. However, the terminal device 20 is not limited to a notebook PC, but may be any other information processing apparatus, such as a desktop PC, a tablet PC, a smartphone or the like. As shown in FIG. 4, the terminal device 20 includes a controller 21, a storage 22, an operator 23, a display 24, a communicator 25, and an imager 26. These sections are connected to each other via a system bus 27.

The controller 21 includes a CPU, a RAM, etc. The CPU of the controller 21 is a processor that reads and executes the program 221 stored in the storage 22 into the RAM and performs various arithmetic operations to control the operation of the various sections of the terminal device 20. The storage 22 is a non-transitory storage medium that can be read by the CPU of the controller 21. The storage 22 stores the program 221 and various data. The storage 22 includes a non-volatile memory, such as HDD, SSD, etc. A program 221 stored in the storage 22 includes a browser and the like. The operator 23 includes a keyboard with various keys and a pointing device that accepts position input. The operator 23 accepts operation input such as key input and position input from the user, and outputs the operation information to the controller 21. Here, it is assumed that the operator 23 includes a mouse as the pointing device. The operator 23 may also include a touch screen integrally formed on a display panel of the display 24, and may be configured to accept touch input from the user.

The display 24 includes an LCD (Liquid Crystal Display) or EL (Electro Luminescence) display. The display 24 performs various displays according to the display information instructed by the controller 21. The communicator 25 performs the communication operation in accordance with the predetermined communication standard. Through this communication operation, the communicator 25 sends and receives data to and from the server 10 via the communication network N. The imager 26 is a digital camera section including an optical system and an imaging device such as a CCD (Charge Coupled Device) or CMOS (Complementary Metal Oxide Semiconductor). The imager 26 images a subject, generates image data of a still image or a moving image, and outputs the image data to the controller 21.

Next, an operation of the learning support system 1 according to the present embodiment will be described. The following describes a case in which the user uses the learning support function in the learning support system 1 on the terminal device 20 and uses the notebook function in the learning support function. First, the controller 21 of the terminal device 20 executes the browser triggered by the input of a browser execution instruction by the user via the operator 23. Next, the controller 11 of the server 10 accepts the input operation of the user ID and the password by the user via the terminal device 20 running the browser, and accepts login of the user's account. Next, the controller 11 transmits screen information to the terminal device 20 for displaying a menu screen (not shown) related to the learning support function using the browser. In response to the terminal device 20 receiving the screen information of the menu screen from the server 10 via the communicator 25, the controller 21 displays the menu screen in cooperation with the browser on the display 24. The items available for selection from the menu screen include the notebook corresponding to each class. In response to a notebook selection operation being performed by the user via the operator 23 from the menu screen, the controller 21 sends the operation information indicating that the notebook selection operation is performed to the server 10 by the communicator 25. In response to the server 10 receiving the operation information indicating that the notebook selection operation is performed from the terminal device 20, the server 10 sends to the terminal device 20 the screen information (data) to display the notebook screen 100 using the browser based on the notebook management information and the object management information of the logged-in user stored in the database 122. In the terminal device 20, in response to the screen information of the notebook screen 100 being received from the server 10 by the communicator 25, the controller 21 displays the notebook screen 100 on the display 24 in cooperation with the browser. In the present specification, the process performed by the controller 11 for the notebook screen 100 (e.g., the process of displaying a waste bin icon 108 described below, the process of displaying a waste bin screen 40, the process of restoring in the notebook screen 100 the object corresponding to a restore button 43 and deleting the object from the waste bin screen 40, etc.) includes the process in which the controller 11 generates data (control data) to be executed by the controller 21 in cooperation with the browser and transmits the data to the terminal device 20 by the communicator 13.

As shown in FIG. 3, the notebook screen 100 includes a storage icon 102, a submission icon 103, a send/receive icon 104, a sticky note creation button group 105, a second object creation button group 106, an end button 107, and a waste bin icon 108. In response to the notebook screen 100 of a new notebook being displayed, no objects are displayed on the initial notebook screen 100. The storage icon 102 is an icon for storing the sticky note placed in the notebook screen 100 in a predetermined folder in response to the sticky note being dragged and moved onto the storage icon 102 by the user. The submission icon 103 is an icon for submitting the sticky note placed in the notebook screen 100 to a predetermined submission destination in response to the sticky note being dragged and moved onto the submission icon 103 by the user. The send/receive icon 104 is an icon in which, in response to the user dragging the sticky note placed in the notebook screen 100 onto the send/receive icon 104, the sticky note is sent to the terminal device 20 used by another user. The send/receive icon 104 is also an icon in which, in response to the clicking input operation being performed by the user, the sticky note sent by another user is received.

The sticky note creation button group 105 includes a plurality of buttons that accept start and other instructions to transition to the process of creating the sticky note to be placed on the notebook screen 100. The sticky note creation button group 105 includes a text button 105a, a camera button 105b, a link button 105c, a file button 105d, a dictionary button 105e, and a tool button 105f. The text button 105a is a button for transitioning to the screen for creating a text sticky note that displays text entered via the operator 23 (e.g., keyboard). The camera button 105b is a button for transitioning to the screen for creating a camera sticky note that displays a taken image taken by the imager 26. The link button 105c is a button for transitioning to the screen for creating a link sticky note with a URL to link to on the web. The file button 105d is a button for obtaining the file such as an image file, a video file, a PDF file, etc., and for transitioning to the screen for creating a file sticky note that displays the image of the obtained file. The dictionary button 105e is a button for transitioning to the screen for creating a dictionary sticky note that displays a headword contained in a dictionary content registered in a dictionary database and explanatory information corresponding to the headword. The dictionary content includes a plurality of headwords and explanatory information associated with each headword. The type of dictionary is not limited and may be language dictionaries such as a Japanese dictionary and an English-Japanese dictionary, as well as an encyclopedia, terminology dictionaries in various fields, or the like. The tool button 105f is a button for transitioning to a screen where information contained by various tools is created as a tool sticky note. Examples of various tools include a mathematical tool including a function to create a graph, etc., and an English sentence analysis tool.

The second object creation button group 106 is a plurality of buttons that accept instructions for creating a second object to be placed on the notebook screen 100. The second object creation button group 106 includes a text box button 106a, a handwriting button 106b, a shape button 106c, and a template button 106d. The text box button 106a is a button for instructing to display on the notebook screen 100 a text box in which a text entered via the operator 23 (e.g., keyboard) is displayed. The handwriting button 106b is a button for instructing to display on the notebook screen 100 a drawing object entered via the operator 23 (e.g., mouse). The shape button 106c is a button for instructing to display on the notebook screen 100 a shape selected via the operator 23 from a predetermined option of the shape. The template button 106d is a button for instructing to display the notebook screen 100 a template selected via the operator 23 from a predetermined option of the template. The end button 107 is a button for instructing end of using the notebook function.

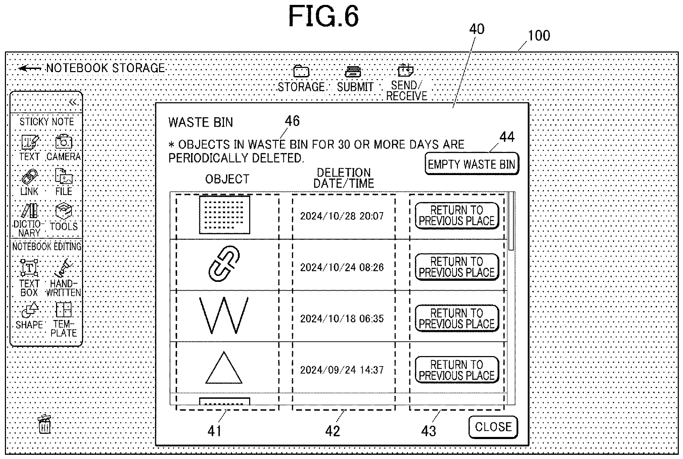

The waste bin icon 108 is an icon for temporarily deleting the object placed in the notebook screen 100 in response to the object being dragged over the waste bin icon 108 by the user. The controller 11 does not display the temporarily deleted object on the notebook screen 100. The waste bin icon 108 is an icon for displaying the waste bin screen 40 (see FIG. 6), which lists and displays the temporarily deleted object in response to the clicking input operation being performed by the user.

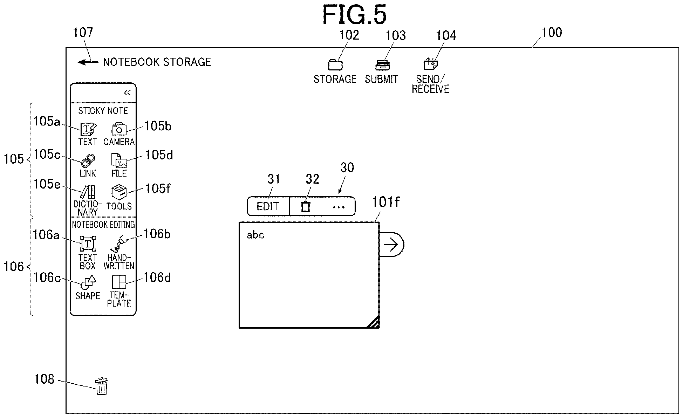

In response to the clicking input operation being performed by the user via the operator 23 of the terminal device 20 on the object placed in the notebook screen 100, the controller 11 displays the operation menu 30 near (e.g., above) the object (e.g., sticky note 101f) in which the clicking input operation is performed as shown in FIG. 5. The operation menu 30 includes an edit button 31 and a delete button 32. The edit button 31 is a button for transitioning to the screen in which information displayed on the sticky note is edited in response to the object in which the clicking input operation is performed being the sticky note. Alternatively, the edit button 31 is a button for transitioning to the screen in which the second object is edited in response to the object in which clicking input operation is performed being a second object. The delete button 32 is a button for temporarily deleting the object in which the clicking input operation is performed.

In response to the object placed in the notebook screen 100 being dragged and moved onto the waste bin icon 108 or in response to the delete button 32 corresponding to the object being selected and operated by the user via the operator 23 of the terminal device 20, and with this the instruction operation to temporarily delete the object being performed, the controller 11 stores the object in the waste bin and deletes (temporarily deletes) the object in a restorable manner. Specifically, the controller 11 moves the object management information of the object indicated for temporary deletion to the waste bin region 122a. As described above, the object corresponding to the object management information moved to the waste bin region 122a is assumed to have been deleted from the notebook screen 100, but since the object management information has not been deleted from the database 122, by moving the object management information from the waste bin region 122a to the original region, the object can be restored as a valid object again. The temporarily deleted object is the object whose object management information is stored in the waste bin region 122a. As described above, the controller 11 executes a control step of displaying at a predetermined position in the notebook screen 100 the icon for temporarily deleting the electronic sticky note from the notebook screen 100 (waste bin icon 108). More specifically, the above control step includes a process in which the controller 11 generates data for the controller 21 to display on the notebook screen 100 an icon for temporarily deleting the electronic sticky note from the notebook screen 100 (waste bin icon 108) in cooperation with the browser and transmits the data to the terminal device 20 by the communicator 13.

In response to one of the multiple linked sticky notes being dragged onto the waste bin icon 108 or the delete button 32 corresponding to the sticky note being selected and operated by the user via the operator 23 of the terminal device 20, and with this, the instruction operation to temporarily delete the sticky note being performed, the controller 11 deletes the linking line attached to the sticky note and temporarily deletes the sticky note. For example, in the example shown in FIG. 3, in response to the sticky note 101b being temporarily deleted, the controller 11 deletes the linking lines A1 and A2 attached to sticky note 101b. In response to the operation instructing temporary deletion of the superimposed sticky note 101e being performed by dragging the superimposed sticky note 101e onto the waste bin icon 108 or by selecting and operating the delete button 32 corresponding to the superimposed sticky note 101e, the controller 11 temporarily deletes all the multiple sticky notes included in the superimposed sticky note 101e.

The controller 11 displays the waste bin screen 40 on the notebook screen 100, as shown in FIG. 6, in response to the clicking input operation being performed on the waste bin icon 108 by the user. On the waste bin screen 40, the controller 11 lists and displays for each temporarily deleted object, in descending order by the date/time of deletion, a thumbnail image 41 corresponding to the temporarily deleted object, a deletion date/time 42 which is the date and time when the temporary deletion was performed, and a restore button 43. The controller 11, for example, creates a thumbnail image of the object by capturing the image data of the temporarily deleted object as a captured image. The restore button 43 is a button for instructing to restore the temporarily deleted object by repositioning within the notebook screen 100 on an object-by-object basis. In addition, the controller 11 displays an empty button 44 and a message 46 indicating timed deletion on the waste bin screen 40.

The controller 11 displays a predetermined number (e.g., up to 10) of temporarily deleted objects in the waste bin screen 40. In response to the number of temporarily deleted objects exceeding such predetermined number, the controller 11 completely deletes the objects in order from the object with the oldest deletion date/time. In response to the object being completely deleted, the controller 11 erases the object management information for that object from the database 122. Since the object management information itself is erased, the erased object management information cannot be restored afterwards, unlike the case in which the object management information is moved to the waste bin region 122a in the database 122. In addition, the controller 11 completely deletes the object management information that is stored in the waste bin region 122a and that meets the predetermined condition periodically as the timed deletion. For example, on the first day of each month, the controller 11 completely deletes from the waste bin screen 40 the object in which 30 or more days have passed from the deletion date/time. In other words, on the first day of each month, the controller 11 completely deletes from the waste bin region 122a the object management information of the object in which 30 or more days have passed from the deletion date/time.

In response to the clicking input operation being performed by the user via the operator 23 of the terminal device 20 on any of the restore buttons 43 on the waste bin screen 40, the controller 11 restores on the notebook screen 100 the object corresponding to the restore button 43 in which the clicking input operation is performed and deletes the object from the waste bin screen 40. In other words, the controller 11 moves the object management information of the object corresponding to the restore button 43 in which the clicking input operation is performed from the waste bin region 122a to the original region in the database 122.

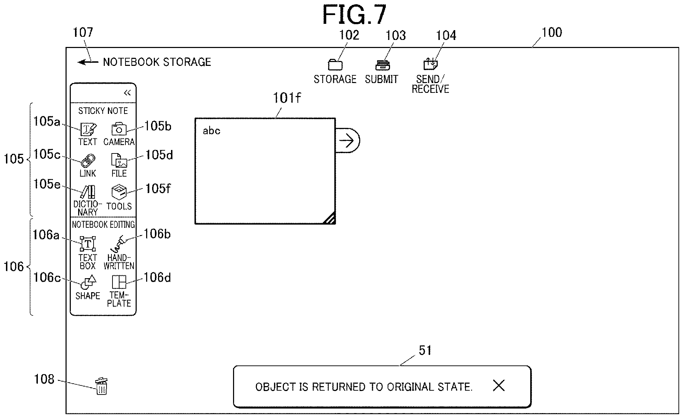

As shown in FIG. 7, the controller 11 places at the foremost surface in the predetermined position (e.g., upper left) on the notebook screen 100 the object (e.g., sticky note 101f) corresponding to the restoration button 43 in which the clicking input operation is performed. Here, in response to the object corresponding to the restoration button 43 in which the clicking input operation is performed being the sticky note, the controller 11 displays the sticky note in the notebook screen 100 according to the display settings such as display size, display angle, and background color at the time it was temporarily deleted. In response to the object corresponding to the restoration button 43 in which the clicking input operation is performed being the second object, the controller 11 displays the second object in the notebook screen 100 (e.g., in the center of the notebook screen 100) according to the display settings such as the display size, display angle, and color at the time when the second object was temporarily deleted. The controller 11 may place at a display position at the time the object was temporarily deleted the object corresponding to the restore button 43 in which the clicking input operation is performed. Furthermore, as shown in FIG. 7, the controller 11 displays a message 51 on the notebook screen 100 as a snackbar, indicating that the object corresponding to the restoration button 43 in which the clicking input operation is performed has been restored in the notebook screen 100.

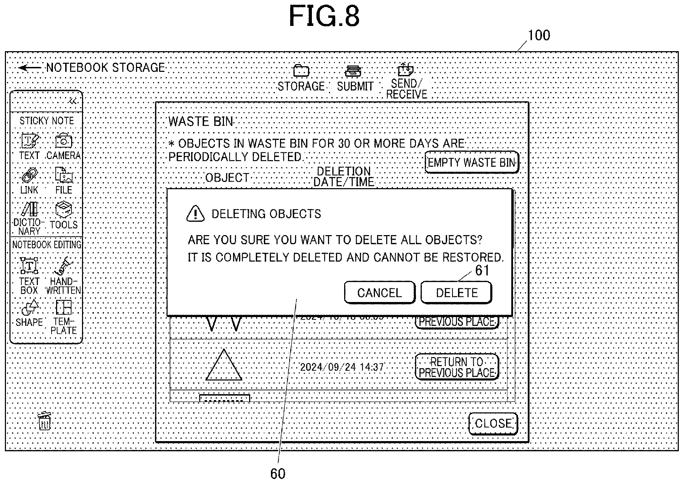

In response to the clicking input operation being performed by the user via the operator 23 of the terminal device 20 on the empty button 44 in the waste bin screen 40, the controller 11 displays a confirmation screen 60 on the waste bin screen 40, as shown in FIG. 8. The controller 11 completely deletes all objects displayed on the waste bin screen 40 in response to the clicking input operation being performed by the user via the operator 23 of the terminal device 20 on the delete button 61 provided in the confirmation screen 60. In other words, the controller 11 completely deletes from the waste bin region 122a all object management information stored in the waste bin region 122a.

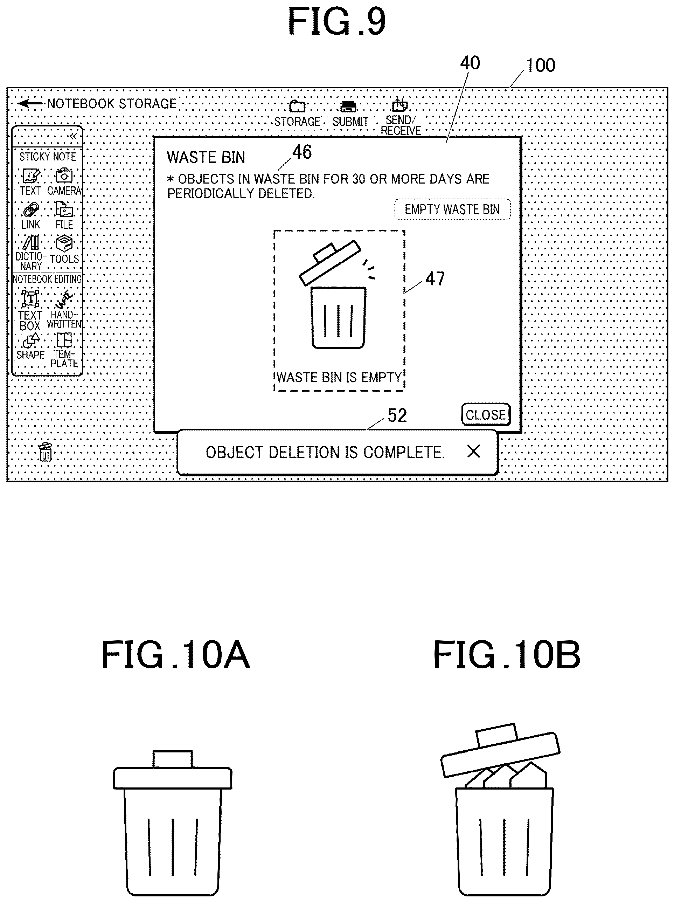

There is a case in which the waste bin is empty, which is the case in which there are no temporarily deleted objects displayed on the waste bin screen 40, that is, there is no object management information stored in the waste bin region 122a. In response to the above, the controller 11 displays an image 47 on the waste bin screen 40 indicating that the waste bin is empty, as shown in FIG. 9. Furthermore, as shown in FIG. 9, in response to the object being completely deleted, the controller 11 displays a message 52 on the notebook screen 100 as the snackbar, indicating that the object displayed on the waste bin screen 40 has been deleted. In response to the waste bin being empty, the controller 11 displays the image shown in FIG. 10A as the image of the waste bin icon 108. On the other hand, in response to one or more temporarily deleted objects being displayed on the waste bin screen 40, the controller 11 displays the image shown in FIG. 10B as the image of the waste bin icon 108. This allows the user to know at a glance whether the waste bin is empty or not.

Regarding the notebook used individually by the user, the controller 11 permits editing of the notebook only to the account with the user ID that corresponds to the notebook management information for that notebook. Regarding the notebook used in a group, the controller 11 permits editing of the notebook only to the accounts with the user IDs of the multiple users who belong to the group associated with the notebook management information for that notebook. The editing of the notebook described above includes temporarily deleting the object, restoring the object from the waste bin screen 40 to the notebook screen 100, and emptying the waste bin. In addition, since one waste bin region 122a is provided for one notebook in the database 122, it is possible to prevent the user from being unable to recognize from which notebook the object stored in the waste bin is temporarily deleted.

Next, the case in which the license for the use of dictionary contents, various tools, etc. registered in the dictionary database has expired is described. The use of the dictionary contents, the various tools, etc. by the user requires the license by purchase, respectively. The controller 11 sets that editing by the user is not allowed on the dictionary sticky note that is located in the notebook screen 100 and that displays the contents of the dictionary contents whose license has expired. The controller 11 also sets that viewing by the user is not allowed in the tool sticky note of the various tools that are located in the notebook screen 100 and whose licenses have expired.

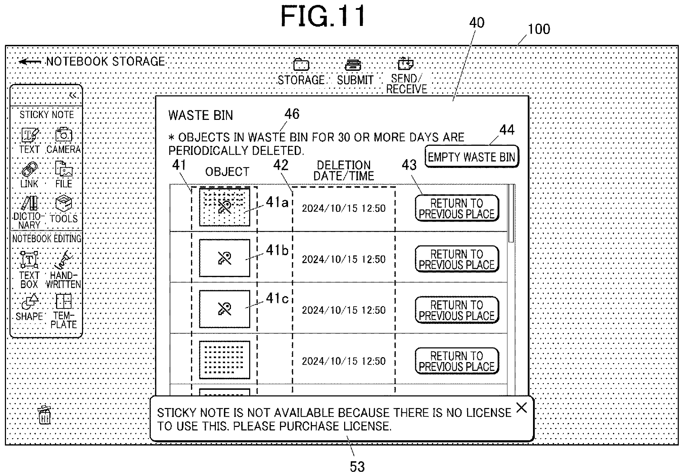

In response to the dictionary sticky note displaying the contents of the dictionary contents whose license has expired or the tool sticky note of the various tools whose license has expired (sticky note with expired license) being dragged and moved onto the waste bin icon 108, or the delete button 32 corresponding to the sticky note whose license has expired being selected and operated, and with this the instruction operation to temporarily delete the sticky note being performed, the controller 11 temporarily deletes the sticky note. In this case, as shown in FIG. 11, the controller 11 displays that the license has expired in a display manner so that it is possible to identify that the license has expired (e.g., the image indicating that the license has expired) as thumbnail images 41a, 41b, and 41c of sticky notes with expired licenses on the waste bin screen 40. In addition, the license by purchase may be required for the use of the video file, the PDF file, etc. displayed on the file sticky note. In this case, the controller 11 sets that viewing by the user is not allowed in the file sticky note of the file that is located in the notebook screen 100 and for which the license has expired. In response to an operation to instruct to temporarily delete the file sticky note whose license has expired being performed, the controller 11 temporarily deletes the sticky note and displays the thumbnail image of the sticky note whose license has expired on the waste bin screen 40 in a display manner so that it is possible to identify that the license has expired.

On the waste bin screen 40, in response to the clicking input operation being performed by the user via the operator 23 of the terminal device 20 on the restoration button 43 corresponding to the sticky note whose license has expired, the controller 11 does not restore the sticky note on the notebook screen 100. The controller 11 then displays a message 53 on the notebook screen 100 as the snackbar indicating that the dictionary contents or various tools displayed on the sticky note cannot be used because their licenses have expired. In other words, if the license pertaining to the contents displayed by the temporarily deleted sticky note has expired, the controller 11 sets the instruction operation to restore the sticky note to invalid. The controller 11 may also hide the restore button 43 corresponding to the sticky note whose license has expired.

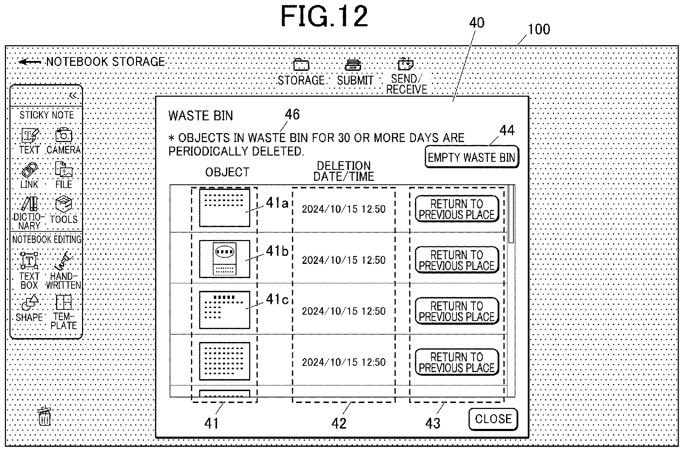

In response to the license becoming valid by the user purchasing the license for the dictionary contents or the various tools, as shown in FIG. 12, the controller 11 displays the image displaying the contents of the sticky note on the waste bin screen 40 as the thumbnail images 41a, 41b, 41c of the sticky note (sticky note whose license became valid) displaying the dictionary contents or the various tools whose licenses became valid. On the waste bin screen 40, in response to the clicking input operation being performed by the user via the operator 23 of the terminal device 20 on the restoration button 43 corresponding to the sticky note whose license has been activated, the controller 11 restores in the notebook screen 100 the sticky note corresponding to the restoration button 43 on which the clicking input operation is performed and deletes the sticky note from the waste bin screen 40. In other words, the controller 11 moves the sticky note management information of the sticky note corresponding to the restoration button 43 in which the clicking input operation is performed from the waste bin region 122a to the original region in the database 122. In other words, in response to the license pertaining to the contents displayed by the temporarily deleted sticky note becoming from expired to valid, the controller 11 changes the instruction operation to restore the sticky note from invalid to valid.

As described above, in response to the sticky note whose license has expired being dragged and moved onto the waste bin icon 108 or the delete button 32 corresponding to the sticky note being selected and operated, the sticky note is temporarily deleted and displayed on the waste bin screen 40 without being completely deleted. This allows the user to restore on the notebook screen 100 the sticky note for which the license has been activated in response to the license becoming valid by purchasing the license for the dictionary contents or the various tools.

Next, the case in which the waste bin becomes the empty state other than the case in which the clicking input operation is performed on the empty button 44 by the user is described. The controller 11 performs the process of emptying the waste bin in the notebook that has been processed for a fiscal year and in the notebook that has been shared and received through a share function. As the fiscal year process, the controller 11 moves the notebook management information of the notebook for the current fiscal year to the region corresponding to "previous class" in the database 122 based on the instruction operation of the user such as an administrator of the learning support system 1. In other words, the controller 11 completely deletes the temporarily deleted electronic sticky note in response to the management information being moved in the storage 12 that stores the management information (notebook management information) that manages the work area (notebook). The share function is a function such as "disclose notebook" or "distribute notebook" that makes the notebook created by another user available to the shared user (the user to whom the notebook is shared). In response to the user instructing to share the notebook, the controller 11 copies the notebook management information of the notebook in the database 122 associated with the user ID of the user to whom the notebook is to be shared. In other words, the controller 11 completely deletes the temporarily deleted electronic sticky note corresponding to the work area managed by the copied management information in response to the management information being copied in the storage 12 that stores the management information (notebook management information) that manages the work area (notebook).

As described above, the program according to the present embodiment causes the computer (controller 11) to function as the controller that displays in the predetermined position in the predetermined work area the icon (waste bin icon 108) for temporarily deleting at least the electronic sticky note from the work area in the predetermined work area (notebook) that can at least display the plurality of electronic sticky notes that can be linked to each other. Therefore, since the sticky note management information of the temporarily deleted electronic sticky note has not been deleted from the database 122, the electronic sticky note can be restored as the valid electronic sticky note. Therefore, even if the electronic sticky note is accidentally deleted in the notebook, there is no need to create the similar electronic sticky note again. This can improve usability when deleting the electronic sticky note.

According to the program of the present embodiment, the icon (waste bin icon 108) is also used as the icon for temporarily deleting a different type of object (second object) than the electronic sticky note displayed in the predetermined work area (notebook). Therefore, since the second object management information for the temporarily deleted second object has not been deleted from the database 122, the second object can be restored as valid. Therefore, if the second object is accidentally deleted in the notebook, there is no need to create the similar second object again. This can improve the usability of deleting the second object.

According to the program of the present embodiment, in response to the controller 11 accepting the instruction operation to restore the temporarily deleted electronic sticky note, the controller 11 places the electronic sticky note at the predetermined position in the work area (notebook) according to the display size, display angle and color at the time the electronic sticky note was temporarily deleted. With this, it is possible to restore the electronic sticky note in the same display manner as at the time the electronic sticky note was deleted, even if the electronic sticky note is accidentally deleted in the notebook.

According to the program of the present embodiment, the predetermined position at which the electronic sticky note is placed in response to the instruction operation to restore the temporarily deleted electronic sticky note being accepted may be the display position of the electronic sticky note at the time the electronic sticky note was temporarily deleted. With this, it is possible to restore the electronic sticky note to the display position at the time the electronic sticky note was deleted, even if the electronic sticky note is accidentally deleted in the notebook.

According to the program of the present embodiment, in response to the license pertaining to the contents displayed by the temporarily deleted electronic sticky note being expired, the controller 11 sets the instruction operation to restore the electronic sticky note to invalid. This can prevent the electronic sticky note with the expired license from being restored in the notebook screen 100.

According to the program of the present embodiment, the controller 11 changes the instruction operation to restore the electronic sticky note from invalid to valid in response to the license pertaining to the content displayed by the temporarily deleted electronic sticky note becoming valid from the expired state. With this, it is possible to restore the electronic sticky note with the valid license in the notebook screen 100 by the user purchasing the license and activating the license.

According to the program of the present embodiment, the controller 11 causes the screen (waste bin screen 40) displaying the thumbnail image 41 of the temporarily deleted electronic sticky note to be displayed on the work area (notebook) and causes the thumbnail image 41 of the electronic sticky note whose license has expired in relation to the contents to be displayed in a manner that it is possible to identify that the license has expired. This allows the user to know that the license for the contents displayed on the electronic sticky note has expired on the waste bin screen 40.

According to the program of the present embodiment, the controller 11 completely deletes the temporarily deleted electronic sticky note in response to the fiscal year process being applied to the work area (notebook). This allows for emptying of the waste bin in the notebook in which the fiscal year process is performed.

According to the program of the present embodiment, the controller 11 completely deletes the temporarily deleted electronic sticky note in response to the user instructing the sharing of the work area (notebook). This allows the waste bin to be emptied in the notebook that has been shared in the share function. As described above, by emptying the waste bin when transferring or moving the notebook in the fiscal year process, the share function, or the like, the capacity of the server 10 on the operator side can be reduced and concerns on the customer (user) side about unnecessary information being passed to others can be prevented.

In addition, as described in the above embodiments, the display of the waste bin icon 108 and the thumbnail image 41 can improve usability when deleting objects such as electronic sticky notes. In other words, the presentation of information according to the present embodiment (display of the waste bin icon 108 and thumbnail image 41) reliably assists the user in performing technical tasks through a human-machine interaction process. Since the object placed in the notebook screen 100 is temporarily deleted by only dragging and moving the object onto the waste bin icon 108, it is possible to reduce the processing load on the controller 11 and the amount of communication between the server 10 and the terminal device 20. This can contribute to improved computer functionality.

The above description discloses an example of using the storage 12 and the storage 22 (HDD, SSD) as computer-readable media for the program of the present disclosure, but is not limited to this example. Other computer-readable media such as a flash memory and a portable recording medium such as a CD-ROM can be applied. Further, as the medium to provide data of the program pertaining to the present disclosure via a communication line, a carrier wave can be applied to the present disclosure. The description in the above embodiment is an example of the program, information processing method, information processing apparatus, and information processing system pertaining to this disclosure, and is not limited thereto. For example, according to the above embodiment, the case in which the controller 11 of the server 10 is the "controller" is illustrated, but the controller 21 of the terminal device 20 may function as the "controller". According to the above embodiment, the case in which the controller 11 of the server 10 displays the notebook screen 100 on the display 24 via the browser running on the terminal device 20 is illustrated, but it is not limited to the above The notebook screen 100 may be configured to be displayed on the display 24 by an application program (hereinafter referred to as "application") stored in the storage 22 of the terminal device 20. For example, the application is downloaded from the server 10 via the communicator 25 and stored in the storage 22. In this case, at least some of the various processes performed on the notebook screen 100 (for example, processes such as displaying the waste bin icon 108, displaying the waste bin screen 40, restoring the object corresponding to the restore button 43 in the notebook screen 100 and deleting the object from the waste bin screen 40, not displaying the temporarily deleted objects in the notebook screen 100, etc.), may be performed by the controller 21.

Although embodiments of the present disclosure have been described, the scope of this disclosure is not limited to the embodiments described above, but includes the scope of the invention described in the claims and its equivalents.

## Claims

1. A program that causes a computer to function as,
a controller (11) that, regarding a predetermined work area that is configured to be capable of at least displaying a plurality of electronic sticky notes that can be linked to each other, displays an icon for temporarily deleting at least the electronic sticky note from the predetermined work area at a predetermined position in the predetermined work area.

2. The program according to claim 1, wherein the icon is also used as the icon for temporarily deleting an object of a different type from the electronic sticky note displayed in the predetermined work area.

3. The program according to claim 1, wherein in response to accepting an instruction operation to restore the temporarily deleted electronic sticky note, the controller causes the electronic sticky note to be placed at the predetermined position in the work area according to a display size, a display angle and a color at a time point of temporary deletion.

4. The program according to claim 1, wherein in response to accepting an instruction operation to restore the temporarily deleted electronic sticky note, the controller causes the electronic sticky note to be placed at a display position of the electronic sticky note at a time point when the electronic sticky note was temporarily deleted.

5. The program according to claim 1, wherein in response to a license regarding contents displayed by the temporarily deleted electronic sticky note being expired, the controller sets an instruction operation to restore the electronic sticky note to invalid.

6. The program according to claim 5, wherein in response to the license regarding the contents displayed by the temporarily deleted electronic sticky note becoming valid from an expired state, the controller changes the instruction operation to restore the electronic sticky note from invalid to valid.

7. The program according to claim 1, wherein the controller displays on the work area a screen that displays a thumbnail image of the temporarily deleted electronic sticky note, and displays, in a display manner that it is possible to identify that a license has expired, the thumbnail image of the electronic sticky note in which the license has expired regarding contents to be displayed.

8. The program according to claim 1, wherein the controller completely deletes the temporarily deleted electronic sticky note in response to a fiscal year process being applied to the work area.

9. The program according to claim 1, wherein the controller completely deletes the temporarily deleted electronic sticky note in response to sharing of the work area being instructed by the user.

10. An information processing method executed by an information processing system (1), the method comprising:
controlling, regarding a predetermined work area that is configured to be capable of at least displaying a plurality of electronic sticky notes that can be linked to each other, generating data for displaying an icon for temporarily deleting at least the electronic sticky note from the predetermined work area at a predetermined position in the predetermined work area.

11. An information processing apparatus (10) comprising:
a controller that, regarding a predetermined work area that is configured to be capable of at least displaying a plurality of electronic sticky notes that can be linked to each other, generates data for displaying an icon for temporarily deleting at least the electronic sticky note from the predetermined work area at a predetermined position in the predetermined work area.

12. An information processing system comprising:
a terminal device (20) including a display (24) that displays a predetermined work area that is configured to be capable of at least displaying a plurality of electronic sticky notes that can be linked to each other; and
an information processing apparatus that is connected to the terminal device in a manner that communication is possible,
wherein the information processing apparatus includes a controller that generates data for displaying an icon for temporarily deleting at least the electronic sticky note from the predetermined work area at a predetermined position in the predetermined work area.
